# EUROPEAN PATENT SPECIFICATION

(11) **EP 2 634 950 B1**
(45) Date of publication and mention of the grant of the patent: **30.11.2016**
(21) Application number: 13002763.4
(22) Date of filing: 23.03.2010
(51) Int. Cl.: H04L 5/00, H04W 52/36

(54) **Method and Apparatus for Power Headroom Reporting**
Verfahren und Vorrichtung zur Leistungsreserve-Berichterstattung
Procédé et appareil pour rapporter le marge de puissance

(30) Priority: 23.03.2009 US 162337 P
(43) Date of publication of application: 04.09.2013
(62) Divisional of application: 10003062.6
(73) Proprietor: Innovative Sonic Limited, Ebene 72201 (MU)
(72) Inventor: Guo, Yu-Hsuan, Taipei City (TW); Lin, Ko-Chiang, Taipei City (TW)
(74) Representative: Hoefer & Partner Patentanwälte mbB

(56) References cited:
- WO-A2-2010/065759
- INTERDIGITAL: "Dual-Cell HSUPA Considerations", 3GPP DRAFT; R2-092449, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090317, 17 March 2009 (2009-03-17), XP050340155, [retrieved on 2009-03-17]
- QUALCOMM EUROPE: "UE Implementation Impact due to DC-HSUPA", 3GPP DRAFT; R1-090434, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090119, 19 January 2009 (2009-01-19), XP050318330, [retrieved on 2009-01-19]
- NOKIA ET AL: "LTE-SIG:TDD related updates in MAC sections", 3GPP DRAFT; R5-091353-523-1-TDD UPDATES IN MAC SECTIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul; 20090316, 16 March 2009 (2009-03-16), XP050342968, [retrieved on 2009-03-16]
- ERICSSON: "UE transmission power headroom report for LTE", 3GPP TSG RAN WG2 #62, R2-082147, , vol. R2-082147, no. 62 5 May 2008 (2008-05-05), pages 1-4, XP002539839, Retrieved from the Internet: URL:http://www.3gpp.org/ftp/tsg_ran/WG2_RL 2/TSGR2_62/Docs/ [retrieved on 2008-05-05]
- NOKIA SIEMENS NETWORKS ET AL: "PUSCH Power Control for LTE-Advanced", 3GPP DRAFT; R1-090738_UL_PC_LTEA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050318602,
- "LTE; Evolved Universal Terrestrial Radio Access (E-UTRA); Physical layer procedures (3GPP TS 36.213 version 8.4.0 Release 8))", ETSI TS 136 213 V8.4.0,, vol. 136 213, no. v8.4.0, 1 November 2008 (2008-11-01), pages 1-61, XP002588197,

## Description

The present invention relates to a method and apparatus for performing Power Headroom Reporting in a user equipment (UE) of a wireless communication system according to the pre-characterizing clauses of claims 1 and 2. A corresponding method is described in R2-092449 "Dual-Cell HSUPA Considerations".

Long Term Evolution wireless communication system (LTE system), an advanced highspeed wireless communication system established upon the 3G mobile telecommunication system, supports only packet-switched transmission, and tends to implement both Medium Access Control (MAC) layer and Radio Link Control (RLC) layer in one single communication site, such as in base stations (Node Bs) alone rather than in Node Bs and RNC (Radio Network Controller) respectively, so that the system structure becomes simple.

In LTE system, a MAC Protocol Data Unit (PDU) consists of a MAC header, zero or more MAC Service Data Units (SDUs), zero or more MAC control elements, and optionally padding. A MAC PDU header consists of one or more MAC PDU sub-headers, each corresponding to either a MAC SDU, a MAC control element or padding. The MAC PDU sub-headers have the same order as the corresponding MAC SDUs, MAC control elements and padding.

According to the current specifications(3GPP TS 36.321, 36.213, 36.133), MAC control elements transmitted by a UE include a buffer status report (BSR) MAC control element and a power headroom report (PHR) MAC control element. The BSR MAC control element is generated by a Buffer Status reporting procedure, and is used to provide the serving base station, or called enhanced Node B (eNB), with information about the amount of data in the uplink (UL) buffers of a UE for scheduling of uplink transmission. The PHR MAC control element is generated by a Power Headroom reporting procedure, and is used to provide the serving eNB with information about the difference between the maximum UE transmission (TX) power and an estimated TX power for Uplink Share Channel (UL-SCH). With the BSR and PHR information sent by the UE, the network can allocate radio resource to the UE and make schedule decision more efficiently.

In general, a PHR is triggered if any of the following events occurs: (1) a timer *"prohibitPHR-TIMER"* for prohibiting power headroom reporting expires or has expired and a path loss of the UE has changed more than a predetermined value *"DL_PathlossChange"* since the last power headroom report; and (2) a periodic timer *"PeriodicPHR-Timer"* expires, in which case the PHR is referred below to as *"periodic PHR".* After the PHR is triggered, if the UE has UL resources allocated for a new transmission for this TTI, the UE obtains the value of the power headroom from the physical layer to generate a PHR MAC control element, and restarts the timer *"prohibitPHR-TIMER"*. Besides, if the triggered PHR is a *"Periodic PHR",* the UE restarts the periodic timer *"PeriodicPHR-Timer"*. Detailed operations of the PHR procedure can be referred to in related specifications (3GPP TS 36.321, 36.213, 36.133) and are not narrated herein.

On the other hand, the 3rd Generation Partnership Project (3GPP) has started to work out a next generation of the LTE system: the LTE Advanced (LTE-A) system, to meet future requirements of all kinds of communication services. Carrier Aggregation (CA) is introduced in the LTE-A system, which enables the UE to aggregate multiple carries for transmission, such that the transmission bandwidth and spectrum efficiency can be enhanced.

At present, the characteristics of carrier aggregation are quoted as below:
(1) Supporting carrier aggregation for both contiguous and non-contiguous component carriers.
(2) The aggregated number of component carriers in the uplink (UL) and the downlink (DL) can be different. For backward-compatible configuration, the aggregated numbers of component carriers in the UL and the DL should be the same.
(3) It is possible to configure a UE to aggregate a different number of component carriers in the UL and the DL to obtain different bandwidths.
(4) From a UE perspective, there is one transport block and one hybrid-ARQ (HARQ) entity per scheduled component carrier. Each transport block is mapped to a single component carrier only.

However, after the carrier aggregation is introduced, how to report the PHR value for different carriers and how to trigger the power headroom reporting are not specified. When multiple carriers are configured for transmission (due to the support of CA), if only one PHR value is reported by the UE, the eNB cannot know the power status of each uplink carrier of the UE and thus is hard to schedule radio resources to the UE efficiently. Therefore, there is a need to have the PHR procedure under carrier aggregation be specified.

This in mind, the present invention aims at providing a method and apparatus for performing Power Headroom Reporting in a user equipment (UE) of a wireless communication system, to support carrier aggregation.

This is achieved by a method and apparatus for performing Power Headroom Reporting (PHR) in a user equipment (UE) of a wireless communication system according to the pre-characterizing clauses of claims 1 and 2. The dependent claims pertain to corresponding further developments and improvements.

As will be seen more clearly from the detailed description following below, the present invention discloses a method for performing Power Headroom Reporting (PHR) in a user equipment (UE) of a wireless communication system. The wireless communication system supports Carrier Aggregation (CA), such that the UE is able to perform transmission through multiple carriers. The method includes steps of configuring a plurality of uplink carriers; and generating at least one PHR value, each corresponding to one of the plurality of uplink carriers. The method further includes triggering the PHR corresponding to a second uplink carrier of the plurality of uplink carriers when the PHR corresponding to a first uplink carrier of the plurality of uplink carriers is triggered.

In the following, the invention is further illustrated by way of example, taking reference to the accompanying drawings. Thereof
FIG.1 is a schematic diagram of a wireless communication system.
FIG.2 is a functional block diagram of a wireless communication device.
FIG.3 is a schematic diagram of the program shown in FIG.2.
FIG.4 is a flow chart of a process according to an embodiment of the present invention.
FIG.5 is a flowchart of a process according to another embodiment of the present invention.

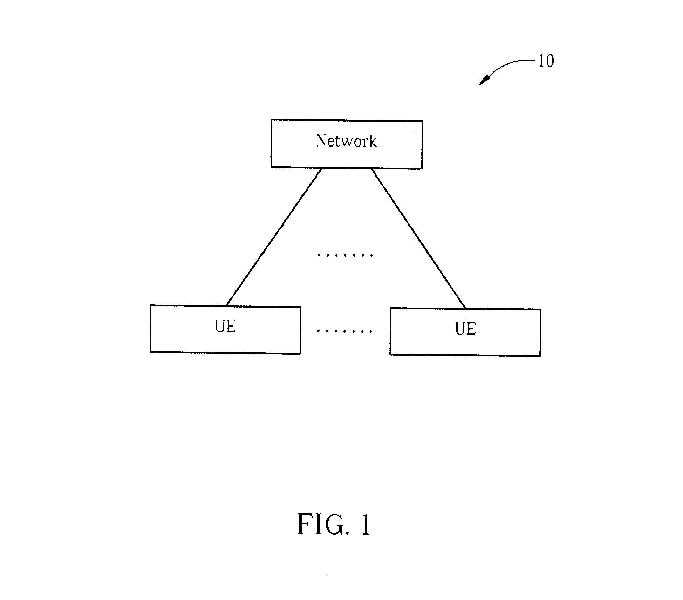

Please refer to FIG.1, which illustrates a schematic diagram of a wireless communications system 10. The wireless communications system 10 is preferred to be an LTE advanced (LTE-A) system, and is briefly composed of a network and a plurality of user equipments (UEs). In FIG.1, the network and the UEs are simply utilized for illustrating the structure of the wireless communications system 10. Practically, the network may comprise a plurality of base stations (Node Bs), radio network controllers and so on according to actual demands, and the UEs can be devices such as mobile phones, computer systems, etc.

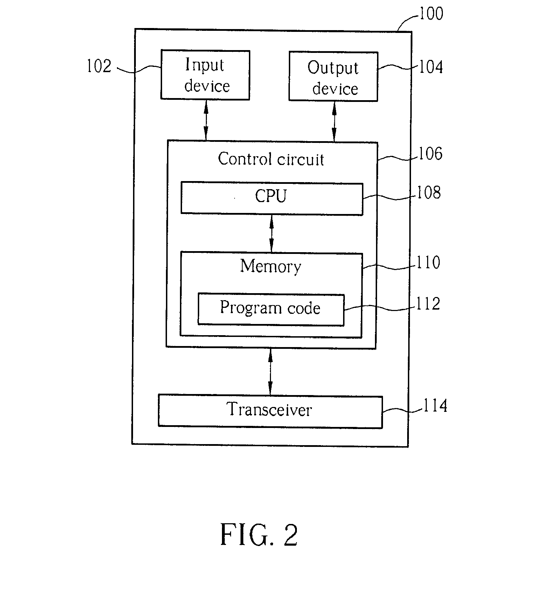

Please refer to FIG.2, which is a functional block diagram of a communications device 100 in a wireless communications system. The communications device 100 can be utilized for realizing the UEs in FIG .1, and the wireless communications system is preferably the LTE system. For the sake of brevity, FIG.2 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

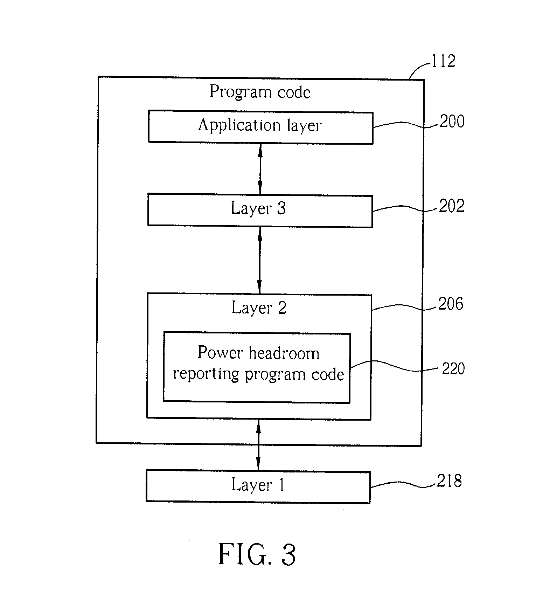

Please continue to refer to FIG.3. FIG.3 is a diagram of the program code 112 shown in FIG.2. The program code 112 includes an application layer 200, a Layer 3 202, and a Layer 2 206, and is coupled to a Layer 1218. The Layer 3 202 performs radio resource control. The Layer 2 206 comprises a Radio Link Control (RLC) layer and a Medium Access Control (MAC) layer, and performs link control. The Layer 1218 performs physical connections.

In LTE-A system, the program code 112 supports Carrier Aggregation (CA), such that the UE is able to perform transmission through multiple carriers. Besides, the MAC layer of the Layer 2 206 performs a Power Headroom Reporting (PHR) procedure, to report power usage status of the UE to the serving base station, such that the network can allocate transmission resources and make scheduling decision efficiently. In such a situation, the embodiment of the present invention provides power headroom reporting program code 220 for performing power headroom reporting under the carrier aggregation, so as to enhance the performance of system resource scheduling.

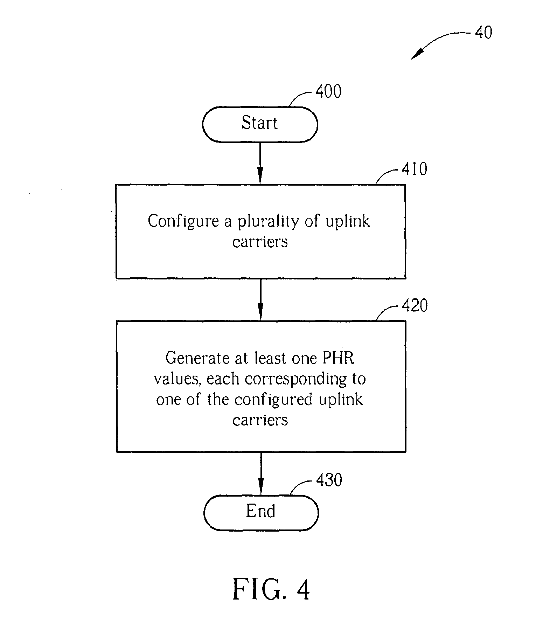

Please refer to FIG.4, which illustrates a schematic diagram of a process 40. The process 40 is utilized for performing power headroom reporting in a UE of the wireless communications system 10, and can be compiled into the power headroom reporting program code 220. The process 40 includes the following steps:
Step 400: Start.
Step 410: Configure a plurality of uplink carriers.
Step 420: Generate at least one PHR value, each corresponding to one of the

According to the process 40, when the carrier aggregation functionality is activated, the UE generates PH values, each corresponding to one of the configured uplink carriers, such that the network can be aware of the power usage status of each configured uplink carrier of the UE. As a result, the network can allocate transmission resources and make scheduling decision efficiently.

As mentioned, a MAC Protocol Data Unit (PDU) consists of a MAC header, zero or more MAC Service Data Units (SDUs), zero or more MAC control elements, and optionally padding. A MAC PDU header consists of one or more MAC PDU sub-headers, each corresponding to either a MAC SDU, a MAC control element or padding. The MAC PDU sub-headers have the same order as the corresponding MAC SDUs, MAC control elements and padding.

In the embodiment of the present invention, the PH values of the configured uplink carriers can be together transmitted in a pre-defined uplink carrier, or can be individually transmitted in its corresponding uplink carrier. For the case that the PH values are all transmitted in the pre-defined uplink carrier, the UE may generate a plurality of PHR Control Elements carried by a same MAC PDU according to the PH values of each configured uplink carrier. Each PHR Control Element may have an identification field, for identifying which uplink carrier the carried PH value is corresponding to. The identification field can be included either in the PHR Control Element, or in a MAC sub-header corresponding to the PHR Control Element.

Certainly, in other embodiments, the PH values of the configured uplink carriers can be all carried by one PHR Control Element through encoding. In this case, the PHR Control Element may need an indication field for indicating the number of carried PH values. In addition, the PHR Control Element may have an identification field, for identifying which uplink carrier the carried PH value is corresponding to. Similarly, the identification field can be included either in the PHR Control Element, or in a MAC sub-header corresponding to the PHR Control Element.

On the other hand, for the case that the PH values of the configured uplink carriers are individually transmitted by its corresponding uplink carrier, the UE may generate a plurality of PHR Control Elements each carried by different MAC PDUs according to the PH values of the configured uplink carriers. Similarly, each of the PHR Control Elements may have an identification field, for identifying which uplink carrier the carried PH value is corresponding to.

Please note that the number of PH values generated by the UE is generally equal to the number of configured uplink carriers. However, in some cases, such as PHR functionality of some uplink carriers is not activated, the number of PH values would be less than the number of configured uplink carriers, but equal to the number of uplink carriers with activated PHR functionality in the configured uplink carriers

From the above, for supporting the carrier aggregation, the UE generates the PH values, each corresponding to one of the configured uplink carriers, such that the network can be aware of the power usage status of each configured uplink carrier of the UE. As a result, the network can allocate transmission resources and make scheduling decision efficiently.

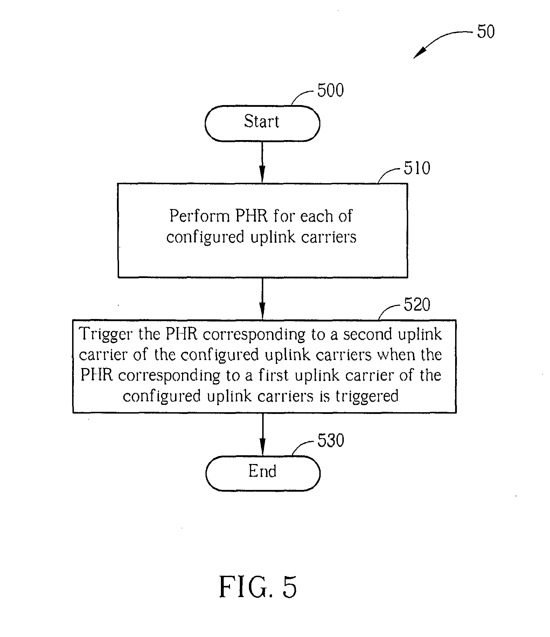

Please refer to FIG.5, which illustrates a schematic diagram of a process 50. The process 50 is utilized for triggering power headroom reporting in a UE of the wireless communications system 10, and can be compiled into the power headroom reporting program code 220. The process 50 includes the following steps:
Step 500: Start.
Step 510: Perform PHR for each of configured uplink carriers.
Step 520: Trigger the PHR corresponding to a second uplink carrier of the configured uplink carriers when the PHR corresponding to a first uplink carrier of the configured uplink carriers is triggered.
Step 530: End.

According to the process 50, when the carrier aggregation is activated, the UE performs PHR for each of the configured uplink carriers, respectively. In such a situation, when the PHR corresponding to a first uplink carrier of the configured uplink carriers is triggered, the UE triggers the PHR corresponding to a second uplink carrier of the configured uplink carriers. That is to say, in the embodiment of the present invention, the PHR triggering of each uplink carrier is linked to each other.

For example, if the PHR corresponding to the first uplink carrier is triggered due to a path loss change of the first uplink carrier, since the path loss of the second carrier may also change, the UE shall trigger the PHR of the second uplink carrier or other configured uplink carriers, for enabling the network to be aware of the power usage status of each uplink carrier of the UE, such that the network is able to allocate radio resources to the UE.

Certainly, the PHR corresponding to the first uplink carrier can also be triggered due to a periodic timer, which also belongs to the scope of the present invention, as long as the PHR triggering of each uplink carrier is linked to each other.

As mentioned in the prior art section, the UE of the LTE system utilizes a periodic timer *"periodicPHR-Timer"* and a timer *"prohibitPHR-TIMER"* for prohibiting power headroom reporting to control the PHR triggering. However, for the LTE-A system that supports the carrier aggregation, since the PHR shall be performed for each configured uplink carrier, if only one set of the above timers is configured in the UE, it is not sufficient to control the PHR triggering for all of the configured uplink carriers.

Therefore, in the embodiment of the present invention, the UE may have multiple sets of timers, each corresponding to one of the configured uplink carriers, for controlling the PHR triggering of the configured uplink carriers. The said timers may include a periodic timer *"periodicPHR-Timer"* and a timer *"prohibitPHR-TIMER"* for prohibiting power headroom reporting, but are not restricted herein. In addition, the number of each kind of timer is preferably equal to the number of configured uplink timers.

On the other hand, when the PHR of some configured uplink carrier is transmitted, the embodiment of the present invention keeps all other triggered PHR pending to allow the trigger PHR able to be sent to the network continuously. Such variation also belongs to the scope of the present invention.

From the above, for supporting the carrier aggregation, the UE shall perform the PHR for each of the configured uplink carriers. Thus, the process 50 provides the PHR triggering method, for allowing the PHR triggering of each configured uplink carrier being linked to each other. As a result, the network is able to obtain power usage status of each configured uplink carrier, and performs resource allocation and scheduling decision more efficiently.

Please note that, in order to have the description clearly, Applicant illustrates the invention by the process 40 and the process 50, separately. However, those skilled in the art can certainly combine the process 40 with the process 50 to meet practical requirements, which also belongs to the scope of the present invention.

In summary, the present invention provides a method and apparatus for performing Power Headroom Reporting to support carrier aggregation in a user equipment (UE) of a wireless communication system.

## Claims

1. A method for performing Power Headroom Reporting, named PHR hereinafter, in a user equipment, named UE hereinafter, of a wireless communication system (10), the wireless communication system (10) supporting Carrier Aggregation, named CA hereinafter, such that the UE is able to perform transmission through multiple carriers, the method comprising:
configuring a plurality of uplink carriers (410); and
generating PH values each corresponding to one of the plurality of uplink carriers (420);
**characterized by**
triggering the PHR corresponding to a second uplink carrier of the plurality of uplink carriers when the PHR corresponding to a first uplink carrier of the plurality of uplink carriers is triggered (520).

2. A communication device (100) for performing Power Headroom Reporting, named PHR hereinafter, in a user equipment, named UE hereinafter, of a wireless communication system (10), the wireless communication system (10) supporting Carrier Aggregation, named CA hereinafter, such that the UE is able to perform transmission through multiple carriers, the communication device (100) comprising:
a processor (108) for executing a program code (112); and
a storage device (110), coupled to the processor (108), for storing the program code (112), wherein the program code (112) comprises:
configuring a plurality of uplink carriers (410); and
generating PH values each corresponding to one of the plurality of uplink carriers (420);
**characterized by**
triggering the PHR corresponding to a second uplink carrier of the plurality of uplink carriers when the PHR corresponding to a first uplink carrier of the plurality of uplink carriers is triggered (520).

3. The method of claim 1 or the communication device (100) of claim 2, **characterized in that** the at least one PH value is/are all carried by a single PHR Control Element.

4. The method of any one of claims 1 and 3 or the communication device (100) of any one of claims 2 to 3, **characterized in that** the number of the at least one PH value is equal to the number of the plurality of uplink carriers, or is equal to the number of uplink carriers with activated PHR functionality in the plurality of uplink carriers.

5. The method of any one of claims 1 and 3 to 4 or the communication device (100) of any one of claims 2 to 4, **characterized in that** the at least one PH value is/are each transmitted by a corresponding uplink carrier of the plurality of uplink carriers, or is/are all transmitted by a pre-defined uplink carrier of the plurality of uplink carriers.

6. The method of any one of claims 1 and 3 to 5 or the communication device (100) of any one of claims 2 to 5, **characterized in that** the PHR corresponding to the first uplink carrier is triggered due to a path loss change of the first uplink carrier, or is triggered due to a periodic timer.

7. The method or the communication device (100) of claim 6, **characterized in that** a timer "*prohibitPHR-Timer*" of the second uplink carrier is not running.

8. The method of any one of claims 1 and 3 to 7 or the communication device (100) of any one of claims 2 to 7, **characterized in that** the UE has a plurality of timers, each corresponding to the plurality of uplink carriers, for controlling PHR triggering in the plurality of uplink carriers.

9. The method or the communication device (100) of claim 8, **characterized in that** the plurality of timers are each a periodic timer "*periodicPHR-Time*", for periodically performing the PHR triggering in the plurality of uplink carriers, or are each a timer "*prohibitPHR-Time*", for prohibiting the PHR triggering in the plurality of uplink carriers during operation.

10. The method or the communication device (100) of claim 8 or 9, **characterized in that** the number of the plurality of timers is equal to the number of the plurality of uplink carriers.

11. The method of any one of claims 1 and 3 to 10 or the communication device (100) of any one of claims 2 to 10, **characterized in that** the method or the program code (112) further comprises:
keeping all other triggered PHR pending when the PHR corresponding to a third uplink carrier of the plurality of uplink carriers is sent.

## Patentansprüche

1. Verfahren zum Ausführen einer Leistungsspielraumauswertung, nachfolgen PHR genannt, in einer Teilnehmerausrüstung, nachfolgend UE genannt, eines Systems (10) zur drahtlosen Kommunikation, wobei das System (10) zur drahtlosen Kommunikation Träger-Aggregation, nachfolgend CA genannt, unterstützt, sodass die UE in der Lage ist, eine Übertragung über mehrere Träger durchzuführen, wobei das Verfahren aufweist:
Konfigurieren einer Mehrzahl von Uplink-Trägern (410); und
Generieren von PH-Werten, die jeder zu einem aus der Mehrzahl von Uplink-Trägern korrespondieren (420);
**gekennzeichnet durch**
Auslösen der PHR, die zu einem zweiten Uplink-Träger aus der Mehrzahl von Uplink-Trägern korrespondiert, wenn die zu einem ersten Uplink-Träger aus der Mehrzahl von Uplink-Trägern korrespondierende PHR ausgelöst wird (520).

2. Kommunikationsvorrichtung (100) zum Ausführen einer Leistungsspielraumauswertung, nachfolgend PHR genannt, in einer Teilnehmereinrichtung, nachfolgend UE genannt, eines Systems (10) zur drahtlosen Kommunikation, wobei das System (10) zur drahtlosen Kommunikation Träger-Aggregation, nachfolgend CA genannt, unterstützt, sodass die UE in der Lage ist, eine Übertragung über mehrere Träger durchzuführen, wobei die Kommunikationsvorrichtung (100) aufweist:
einen Prozessor (108) zum Ausführen eines Programm-Codes (112); und
eine Speichervorrichtung (110), die mit dem Prozessor (108) verbunden ist, zum Speichern des Programm-Codes (112), wobei der Programm-Code (112) aufweist:
Konfigurieren einer Mehrzahl von Uplink-Trägern (410); und
Generieren von PH-Werten, die jeder zu einem aus der Mehrzahl von Uplink-Trägern korrespondieren (420);
**gekennzeichnet durch**
Auslösen der PHR, die zu einem zweiten Uplink-Träger aus der Mehrzahl von Uplink-Trägern korrespondiert, wenn die PHR, die zu einem ersten Uplink-Träger aus der Mehrzahl von Uplink-Trägern korrespondiert, ausgelöst wird (520).

3. Verfahren gemäß Anspruch 1 oder Kommunikationsvorrichtung (100) gemäß Anspruch 2, **dadurch gekennzeichnet, dass** alle des mindestens einen PH-Werts durch ein einzelnes PHR-Steuerelement transportiert wird/werden.

4. Verfahren gemäß einem der Ansprüche 1 und 3 oder Kommunikationsvorrichtung (100) gemäß einem der Ansprüche 2 bis 3, **dadurch gekennzeichnet, dass** die Anzahl des mindestens einen PH-Werts gleich der Anzahl der Mehrzahl von Uplink-Trägern ist oder gleich der Anzahl von Uplink-Trägern mit aktivierter PHR-Funktionalität in der Mehrzahl von Uplink-Trägern ist.

5. Verfahren gemäß einem der Ansprüche 1 und 3 bis 4 oder Kommunikationsvorrichtung (100) gemäß einem der Ansprüche 2 bis 4, **dadurch gekennzeichnet, dass** der mindestens eine PH-Wert jeweils durch einen korrespondierenden Uplink-Träger aus der Mehrzahl von Uplink-Trägern übertragen wird, oder dass alle des mindestens einen PH-Werts durch einen vordefinierten Uplink-Träger aus der Mehrzahl von Uplink-Trägern übertragen wird/werden.

6. Verfahren gemäß einem der Ansprüche 1 und 3 bis 5 oder Kommunikationsvorrichtung (100) gemäß einem der Ansprüche 2 bis 5, **dadurch gekennzeichnet, dass** die zu dem ersten Uplink-Träger korrespondierende PHR aufgrund einer Pfadverluständerung des ersten Uplink-Trägers ausgelöst wird oder aufgrund eines periodischen Zeitgebers ausgelöst wird.

7. Verfahren oder Kommunikationsvorrichtung (100) gemäß Anspruch 6, **dadurch gekennzeichnet, dass** ein Zeitgeber "prohibitPHR-Timer" des zweiten Uplink-Trägers nicht läuft.

8. Verfahren gemäß einem der Ansprüche 1 und 3 bis 7 oder Kommunikationsvorrichtung (100) gemäß einem der Ansprüche 2 bis 7, **dadurch gekennzeichnet, dass** die UE eine Mehrzahl von Zeitgebern aufweist, die jeder zu der Mehrzahl von Uplink-Trägern korrespondieren, zum Steuern eines PHR-Auslösens in der Mehrzahl von Uplink-Trägern.

9. Verfahren oder Kommunikationsvorrichtung (100) gemäß Anspruch 8, **dadurch gekennzeichnet, dass** jeder der Mehrzahl von Zeitgebern ein periodischer Zeitgeber "periodicPHR-Timer" zum periodischen Ausführen des PHR-Auslösens in der Mehrzahl von Uplink-Trägern ist oder ein Zeitgeber "prohibitPHR-Timer" zum Unterbinden des PHR-Auslösens in der Mehrzahl von Uplink-Trägern während eines Betriebs ist.

10. Verfahren oder Kommunikationsvorrichtung (100) gemäß Anspruch 8 oder 9, **dadurch gekennzeichnet, dass** die Anzahl der Mehrzahl von Zeitgebern gleich der Anzahl der Mehrzahl von Uplink-Trägern ist.

11. Verfahren gemäß einem der Ansprüche 1 und 3 bis 10 oder Kommunikationsvorrichtung (100) gemäß einem der Ansprüche 2 bis 10, **dadurch gekennzeichnet, dass** das Verfahren oder der Programm-Code (112) weiter aufweist: Halten aller anderen ausgelösten PHRs als unerledigt, wenn die zu einem dritten Uplink-Träger aus der Mehrzahl von Uplink-Trägern korrespondierende PHR gesendet wird.

## Revendications

1. Procédé pour effectuer un Rapport de Marge de Puissance, dénommé ci-après PHR, dans un équipement utilisateur, dénommé ci-après UE, d'un système de communication sans fil (10), le système de communication sans fil (10) prenant en charge une Agrégation de Porteuses, dénommée ci-après CA, de sorte que l'UE soit capable d'effectuer une transmission par l'intermédiaire de multiples porteuses, le procédé comprenant le fait:
de configurer une pluralité de porteuses de liaison montante (410); et
de générer des valeurs de PH correspondant chacune à l'une de la pluralité de porteuses de liaison montante (420);
**caractérisé par** le fait:
de déclencher le PHR correspondant à une deuxième porteuse de liaison montante de la pluralité de porteuses de liaison montante lorsque le PHR correspondant à une première porteuse de liaison montante de la pluralité de porteuses de liaison montante est déclenché (520).

2. Dispositif de communication (100) pour effectuer un Rapport de Marge de Puissance, dénommé ci-après PHR, dans un équipement d'utilisateur, dénommé ci-après UE, d'un système de communication sans fil (10), le système de communication sans fil (10) prenant en charge une Agrégation de Porteuses, dénommée ci-après CA, de sorte que l'UE soit capable d'effectuer une transmission par l'intermédiaire de multiples porteuses, le dispositif de communication (100) comprenant:
un processeur (108) pour exécuter un code de programme (112); et
un dispositif de stockage (110), couplé au processeur (108), pour stocker le code de programme (112), dans lequel le code de programme (112) comprend le fait:
de configurer une pluralité de porteuses de liaison montante (410); et
de générer des valeurs de PH correspondant chacune à l'une de la pluralité de porteuses de liaison montante (420);
**caractérisé par** le fait:
de déclencher le PHR correspondant à une deuxième porteuse de liaison montante de la pluralité de porteuses de liaison montante lorsque le PHR correspondant à une première porteuse de liaison montante de la pluralité de porteuses de liaison montante est déclenché (520).

3. Procédé selon la revendication 1 ou dispositif de communication (100) selon la revendication 2, **caractérisé en ce que** l'au moins une valeur de PH est/sont toutes portée(s) par un seul Élément de Commande PHR.

4. Procédé selon l'une quelconque des revendications 1 et 3 ou dispositif de communication (100) selon l'une quelconque des revendications 2 et 3, **caractérisé en ce que** le nombre de l'au moins une valeur de PH est égal au nombre de la pluralité de porteuses de liaison montante, ou est égal au nombre de porteuses de liaison montante avec une fonctionnalité PHR activée dans la pluralité de porteuses de liaison montante.

5. Procédé selon l'une quelconque des revendications 1, 3 et 4 ou dispositif de communication (100) selon l'une quelconque des revendications 2 à 4, **caractérisé en ce que** l'au moins une valeur de PH est/sont transmise(s) chacune par une porteuse de liaison montante correspondante de la pluralité de porteuses de liaison montante, ou est/sont toutes transmise(s) par une porteuse de liaison montante prédéfinie de la pluralité de porteuses de liaison montante.

6. Procédé selon l'une quelconque des revendications 1 et 3 à 5 ou dispositif de communication (100) selon l'une quelconque des revendications 2 à 5, **caractérisé en ce que** le PHR correspondant à la première porteuse de liaison montante est déclenché en raison d'un changement d'affaiblissement de propagation de la première porteuse de liaison montante, ou est déclenché en raison d'un temporisateur périodique.

7. Procédé ou dispositif de communication (100) selon la revendication 6, **caractérisé en ce qu'**un temporisateur "*prohibitPHR-Timer*" de la deuxième porteuse de liaison montante n'est pas en marche.

8. Procédé selon l'une quelconque des revendications 1 et 3 à 7 ou dispositif de communication (100) selon l'une quelconque des revendications 2 à 7, **caractérisé en ce que** l'UE a une pluralité de temporisateurs correspondant chacun à la pluralité de porteuses de liaison montante, pour commander le déclenchement de PHR dans la pluralité de porteuses de liaison montante.

9. Procédé ou dispositif de communication (100) selon la revendication 8, **caractérisé en ce que** la pluralité de temporisateurs sont chacun un temporisateur périodique "*periodicPHR-Timer*", pour effectuer périodiquement le déclenchement de PHR dans la pluralité de porteuses de liaison montante, ou sont chacun un temporisateur *"prohibitPHR-Timer*", pour interdire le déclenchement de PHR dans la pluralité de porteuses de liaison montante pendant le fonctionnement.

10. Procédé ou dispositif de communication (100) selon la revendication 8 ou 9, **caractérisé en ce que** le nombre de la pluralité de temporisateurs est égal au nombre de la pluralité de porteuses de liaison montante.

11. Procédé selon l'une quelconque des revendications 1 et 3 à 10 ou dispositif de communication (100) selon l'une quelconque des revendications 2 à 10, **caractérisé en ce que** le procédé ou le code de programme (112) comprend en outre le fait:
de garder tous les autres PHR déclenchés en attente lorsque le PHR correspondant à une troisième porteuse de liaison montante de la pluralité de porteuses de liaison montante est envoyé.
